(19)

Europäisches
Patentamt
European
Patent Office
Office européen
des brevets

(11) **EP 2 058 286 A1**

(12) **EUROPEAN PATENT APPLICATION**

(43) Date of publication:
**13.05.2009 Bulletin 2009/20**

(51) Int Cl.:
*C04B 18/28* (2006.01)    *C04B 28/10* (2006.01)

(21) Application number: **07394027.2**

(22) Date of filing: **12.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **McCabe, Marcus**
**Co. Monaghan (IE)**

(72) Inventor: **McCabe, Marcus**
**Co. Monaghan (IE)**

(74) Representative: **Purdy, Hugh Barry et al**
**Purdy & Company**
**138-139 Capel Building**
**Mary's Abbey**
**Dublin 7 (IE)**

(54) **A process for treating hemp**

(57) A process for treating hemp comprises a step of admixing the hemp with calcium oxide to form a reaction mixture, and allowing the calcium oxide react with water in the hemp for a reaction period sufficient to decrease the moisture content of the hemp. The hemp:calcium oxide ratio in the reaction mixture is between 10:20 and 10:1 (w/w). The reaction mixture is processed to ensure intimate contact between the hemp and the calcium oxide. Suitably, the process is a process for (partially) drying hemp. Also described is a hemp/lime product obtainable by the process of the invention.

EP 2 058 286 A1

**Description**

**INTRODUCTION**

The invention relates to a process of treating hemp. In particular, the invention relates to a process for reducing the moisture content of hemp. The invention also relates to hemp products obtainable by the processes of the invention.

Hemp used to be one of the worlds most important crops, primarily due to the strength of its fibres. Up to the end of the 1900's, hemp was widely used in the manufacture of the majority of the world's paper, rope, twine, sails, rigging and nets. Oil from hemp was widely used oil for lighting. In the period between the wars, the advent of polymeric fibres such as NYLON all but decimated the world's hemp production and consequently production in the British Isles virtually ceased. However, in the 1980's, the search for economically valuable non-food crops lead to the identification of hemp as a promising species, due to the high yields obtainable and a large number of industrial uses (MDF Boards ., concrete, energy source).

Currently the processing of hemp involves harvesting, field drying of the long hemp stems, the cutting of the stems into shorter stems, and the removal of the fibre from the woody core or hurd (a process known as decortication). Prior to this step the hemp must be dried to a moisture content of less than 20% (w/w). This is a time and energy intensive, and consequently an expensive process that sits badly with the sustainability arguments that are needed to satisfy the environmental market. Furthermore, the drying process is also capital intensive, requiring the use of expensive machinery. Currently the cost of a 10,000 ton/annum line costs €4million before civils and installation are included. In countries with temperate maritime climates, such as in coastal Western Europe, there is relatively high rainfall during the summer and the hemp that is harvested can have a high moisture content, which adds to the importance and difficulty of the drying process.

Field drying is an alternative to an industrial forced drying process discussed above, however, there is a high risk of losing the crop during inclement weather and this is coupled with the consequential loss of use of the field for agricultural activity while the hemp crop remains in the field. With this method of drying timescales are entirely dependent on the weather and planting times could be missed altogether.

It is an object of the invention to overcome at least some of the above-referenced problems.

**STATEMENTS OF INVENTION**

According to the invention, there is provided a process for treating hemp comprising a step of admixing the hemp with calcium oxide to form a reaction mixture, and allowing the calcium oxide react with water in the hemp for a reaction period sufficient to decrease the moisture content of the hemp. In the reaction, the calcium oxide reacts with water in the hemp to produce calcium hydrate and energy in the form of heat.

Thus, in one aspect, the process of the invention provides a method for reducing the moisture content of the hemp by allowing the moisture in the wet hemp to react with calcium oxide (such as quick lime) to produced calcium hydroxide (hydrated / slaked lime). This process is exothermic, generating energy in the form of heat which can be recovered and used for other purposes.

In one embodiment, the process is a process for reducing the moisture content of hemp. In this regard, the process of the invention may employ a separation step in which the resultant (partially) dried hemp and slaked lime are separated, e.g. by screening, providing hemp of desired dryness and slaked lime as saleable product.

Because water comes directly from the wet hemp the resultant slaked lime and hemp mixture is in more intimate contact than if slaked lime is directly mixed with dried hemp. This confers a great competitive advantage to the hemp/lime products obtainable from this process as the slaked lime is intimately mixed with the hemp, providing an additional structural element to the hemp. Without being bound by theory, it is believed that water contained within the cells of the hemp, and extracellular water contained within the hemp, is replaced with slaked lime, resulting in the slaked lime being drawn into the hemp plant. Thus, in one embodiment, the process is a process for producing a hemp/lime product. Further, the invention relates to a hemp/lime product obtainable according to the process of the invention.

In the process of the invention, water in the hemp reacts with the calcium oxide (often provided in the form of quick lime) in an exothermic reaction to form calcium hydroxide (commonly known as slaked or hydrated lime) and heat.

$$CaO + H_2O \leftrightarrow Ca(OH)_2 + 488 \text{ BTU/lb of CaO}$$

From a drying point of view, this has the two-fold effect of removing water from the reaction mixture chemically through the formation of calcium hydrate, and the removal of water by means of evaporation as a result of the heat generated in the reaction vessel. In this regard, it is preferable that the reaction between hemp and calcium oxide is carried out in an insulated reaction vessel, whereby the heat of reaction is prevented dissipating out of the vessel through the walls of the vessel.

The amount of calcium oxide required in the process depends on a number of variables, including the moisture content of the starting hemp material, the desired moisture content of the finished hemp material, the type of hemp being processed, and also the thermal conductivity of the reaction vessel in which the process of the invention is being carried out. Thus, as it hydrates, approximately 3.1kg of calcium oxide combines with approximately 1kg of water to produce calciumhydroxide. Thus, if you start with 1 tonne of hemp having a moisture content of 70%, approximately 700kg of the hemp will be water. If you require that the moisture content be reduced to 19%, this would entail that 245kg of water is removed. In ideal reaction conditions, about 790kg of calcium oxide would be required to remove the 110kg of moisture. This would mean that the hemp:calcium oxide ratio would be 100:79 (w/w). However, as ideal reaction conditions would not be achieved, it would advisable to use an excess of calcium oxide, possibly in the region of 100:200 hemp:calcium oxide (w/w).

In one embodiment of the invention, the process involves the steps of determining the moisture content of the starting hemp material, deciding the desired moisture content of the finished hemp product, calculating the amount of water to be removed from the hemp to arrive at the desired moisture content, subsequently calculating the amount of the calcium oxide required to remove that amount of water under ideal reaction conditions, and employing excess calcium oxide in the reaction.

In one embodiment of the invention, the hemp:calcium oxide ratio in the reaction mixture is between 10:20 and 10:1 (w/w), and is ideally between 10:20 and 10:1 (w/w).

The calcium oxide may be provided in a substantially pure form. However, it may also be provided in the form of lime, quicklime, or burnt lime having a high proportion of calcium oxide. In a preferred embodiment of the invention the calcium oxide is provided in the form of high calcium quicklime.

Generally, the starting hemp material will have a moisture level of greater than 20% (w/w), and the reaction time of the process will be sufficient to decrease the moisture content of the hemp to 30% or less. In one embodiment, the starting hemp material will have an initial moisture content (i.e. immediately prior to processing) of at least 25%, preferably at least 30%, preferably at least 35%, and suitably at least 70%. In one embodiment, the reaction time will be sufficient to reduce the moisture content of the hemp to less than 19%, 18%, 17%, 16%, 15%, 14%, 13%, 12%, 11% or 10%. In one preferred embodiment of the invention, the starting hemp material will be ensiled hemp having a moisture content of greater than 20% (w/w).

In one embodiment, the process will include a sampling step whereby the hemp is sampled several times during the reaction and assayed for moisture content whereby, once the desired moisture content has been achieved (or exceeded), the reaction will be stopped. Stopping the reaction is typically achieved by removing the hemp from the reaction vessel, and/or by removing the remaining calcium oxide from the reaction.

In another embodiment, the calcium oxide is provided in a water permeable bag which allows moisture transfer through the walls of the bag from the hemp to the calcium oxide, but allows easy removal and separation of the calcium oxide from the hemp. Depending on the size of the calcium oxide crystals, the bag may take the form of a mesh bag having a mesh size of between, for example, 1 and 5mm. In this embodiment, one or more such mesh bags containing calcium oxide are placed in a reaction vessel with an amount of hemp, and the contents are mixed to ensure contact time between the hemp and the calcium oxide in the bags. The hemp in the reaction vessel is sampled at intervals for moisture content. When the desired moisture content has been reached, the bags are removed from the reaction mixture, thereby stopping the reaction.

Generally, the hemp and the calcium oxide are added to a reaction vessel and mixed by means of a twin auger or turned during the reaction period so as to allow a sufficient amount of contact between the calcium oxide and as much of the hemp as possible. This is achieved, for example, by means of any suitable bulk mixer having a screw or auger type mixer, operating continuously or discontinuously. For example, the hemp and calcium oxide may be added to the mixer, mixed initially for a period of time, and then allowed to sit for a period of time to allow the calcium oxide react with the moisture in the hemp. After a suitable period of time, for example, ten minutes, the materials may be mixed again for a further minute before being allowed to sit for a further reaction period. This is repeated until the desired moisture content in the hemp is achieved.

In one embodiment of the invention, the reaction mixture is compacted or compressed during the reaction period to ensure an intimate contact between the hemp material and the calcium oxide.

Suitably, the process includes an initial step of chopping the harvested hemp stems into lengths of less than 1cm.

The invention also relates to a process for preparing hemp comprising the steps of harvesting the hemp, chopping the hemp stems into lengths of less than 1m, reducing the moisture content of the hemp according to a process of the invention, and baling or ensiling the thus-treated hemp.

The invention also relates to a process of pasteurising hemp comprising a step of treating hemp according to the process of the invention. The invention also relates to pastuerised hemp obtainable by the process of the invention.

The invention also relates to (partially) dried hemp obtainable by a process of the invention.

The invention also relates to a hemp/lime product obtainable according to the process of the invention.

The invention also relates to a hemp/lime product comprising hemp having a vascular architecture including cells and extracellular spaces, and wherein at least some of the moisture contained within the cells and/or extracellular spaces of the hemp is converted to slaked lime by reaction of the moisture with calcium oxide.

The invention also relates to a process for producing an intermediate aggregate for a hemp/lime product, comprising the steps of reducing the moisture content of hemp according to the process of the invention to produce partially dried hemp, and optionally breaking up or milling the partially dried hemp.

The invention also relates to a process for producing a hemp/lime product comprising the steps of reducing the moisture content of hemp according to the process of the invention to produce partially dried hemp, and adding liquid to the partially dried hemp. Typically, the liquid is water, or an aqueous solvent.

In the process of the invention, the step of reducing the moisture content results in water in the hemp (in the cells and spaces between the cells) being at least partially replaced with slaked lime (by virtue of the water reacting with calcium oxide to produce calcium hydroxide), resulting in the hardening of the hemp. The step of adding the water results in the production of a hemp/lime wet mix, which may be stored. Thus, in effect, water is removed from the hemp in a drying process which converts cellular and free water in the hemp to slaked lime producing an intermediate aggregate in which slaked lime is incorporated into the hemp. Water is then added to the intermediate to produce a wet mix. When this wet mix is used, for example when it is applied to a surface as hemp/lime plaster rendering, the wet mix dries, absorbs carbon dioxide from the atmosphere, and hardens.

In this specification, the term hemp/lime product should be understood as meaning any product comprising hemp and slaked lime or calcium hydroxide such as, for example, hemp-crete products, hemp-based floor screed, hemp lime block, hemp lime plaster, and hemp lime renderings and the like.

The process for producing a hemp/lime product and hemp/lime intermediate aggregate ideally employs ensiled hemp as a starting material. In other words, the step of reducing the moisture content of the hemp employs ensiled hemp as a starting material. Ideally, the process employs a step of breaking up the partially dried hemp prior to addition of the water. Typically, the partially dried hemp is broken up in a grinding or milling operation.

The invention also relates to a process for producing a hemp calcium carbonate product comprising the steps of treating the hemp to reduce the moisture content according to the process of the invention, and then reacting the (partially) dried hemp with carbon dioxide for a period of time sufficient to allow the slaked lime (calcium hydrate) within the hemp be converted to calcium carbonate.

The invention also relates to a hemp calcium carbonate product obtainable by the process of the invention.

## DETAILED DESCRIPTION OF THE INVENTION

The invention will be more clearly understood from the following description, given by way of example only.

Example 1

Freshly harvested hemp was weighed and was determined to have a dry matter content of 30%. The hemp was chopped to approximitly 10-20mm lengths. Quicklime was added at a proportion of 1 hemp:1 quicklime by weight in an open vessel. A weight was placed on the mixture to improve contact. The mixture was left to react and an exotheric process was observed after one half hour. After the mixture had cooled a sample was removed and weighed. The sample weighed 172 grams. The sample was then oven dried at 200°C for 30 minutes to remove substantially all of the moisture content. After drying the sample weighed 130 grams. Thus, 42g of water remained after the quicklime treatment which is the equivalent of 24% moisture content. Thus, the process of the invention reduced the moisture content of the hemp from 70% to 24% in a short period of time.

Example 2

A bail of plastic wrapped 4ft x 4ft ensiled hemp was stored outside for one month and delivered to site for processing. The bail was opened at 6pm and a wet straw mass with strong lactic acid odour and extensive microbial colonies were observed. This raw ensiled straw was removed and reduced and pulverised to approximately 6mm particle length and layered with powdered quicklime. This mixture was placed in a vessel with a lid that was in turn placed in an insulated box and a heavy weight applied to maintain intimate contact between the hemp and the powdered quicklime. This reaction mixture was left for two hours after which the mass of hemp had become quite solid and an expansion of the mass had taken place. This mixture was lightly milled to break up the mass and this was mixed with water in a ratio of 30% water. After addition of water no further heat evolution was observed, indicating the all of the quicklime had been converted to slaked lime. A portion of this mixture was applied to a dry rendered blockwork wall with a plasterers trowel and a closed surface was achieved. This was three hours after the hemp was removed from the bail. It was noted that the applied plaster did not exhibit the same rank odours of the original hemp silage, indicative that pasteurization had occurred. Gradual hardening was evident within minutes and good adhesion was also self-evident.

The lack of exotherm when additional water was added confirms that the water used in the reaction of 'quick lime' to 'slaked lime' originated from hemp material only. This simple test also demonstrates that expensive process of field drying and the Capital expensive process of decertification, in a dry line, currently used in the hemp industry are redundant steps in the generation of hemp/lime based building materials.

Example 3

A bail of wet (70%)ensiled hemp silage was split and layered with powdered quick lime in equal proportions by weight forming a volume of approximately one cubic meter. The materials were mixed and lightly compacted to bring the materials into intimate contact. Within minutes some warming was detected and a significant plume of steam began to emanate from the mixed pile. Crackling and popping sound were soon heard indicating significant reaction. During this heating stage the nature of the odour changed noticeably from the rather rancid odours of the silage to a rather pleasant woody smell.

This pile was left for approximately 2 hours and upon our return the pile still had a plume of steam emanating but it was reduced and the smell had a burn wood/charred quality. Significantly several burning embers were noted indicating that the temperature had been high enough for some spontaneous ignition to occur. This indicates that care needs to be taken with the precise homogenization of the mixture to restrict localised surpluses of quicklime so that hot spots do not occur.

Example 4.

100kg of freshly swathed hemp was placed into a chopper box and chopped into lengths of .01 to 01.m in length. The moisture content of chopped hemp was measured as 70% (w/w). The chopped hemp was then placed in a large mixer and 100kg high calcium quicklime added. The contents were then mixed for two minutes to disperse the quicklime throughout the hemp, before being left to react for one hour. The contents were then mixed for a further two minutes before being left for two hours to react. The final product hemp was found to have a moisture content of 19% .

With convention hemp farming techniques, field losses for farmers are heavy, reducing profit for farmers. It is envisaged that storage will be a major obstacle as production expands over the coming years. While farmers see hemp as a new and exciting break-crop crop saving over 6 weeks of September and October, field losses of up to 40%, delays in sowing subsequent crops are all barriers to general farming acceptance and profitability.

Industrial hemp processing is currently exclusively based on the reduction of the dried crop through a dry-line decortication system based on hammer mills and/or roller breakers and subsequent separation of fibre hurd/shive and dust. Systems are supplied by companies such as Tamafa, Van Domelle and LaRoche with a price tag of £3-5Million for a 10,000 ton/annum line involving up to 70 pieces of separate equipment. Hemp decortication is a capital intensive process and the hemp must be dry or serious production blockages and delays will occur. It should be pointed out that regarding the production of hemp/lime materials, water is added at the end of the process, thus water is removed in the field only to be re-added again by the processor

According to one aspect of the invention, ensiled hemp Is brought into intimate contact with Calcium oxide or quicklime in a reaction vessel. The embodied water in the ensiled hemp reacts with quicklime

$$H2O(hemp) + CaO = CaOH + heat$$

Farming aspects

In this process, the supply chain begins with ensiled hemp. The hemp crop is cut and chopped, blown into a forage wagon by a suitable forager such as a Class Jaguar 850 6mm precision chop and blown into a forage trailer and removed immediately from the field to be ensiled in existing silage pits. Lactic acid bacteria quickly convert the material to stable hemp silage for storage until required for further processing. This step has a number of advantages:

- The farmer losses none of his crop and 98% of the crop should end up on the weigh bridge
- The farmer can immediately plough his field for a winter cereal such as wheat
- The farmer has no turning operation to dry the crop. Some farmers have had to turn the crop up to 6 times in 07 and during each turning operation some losses occur
- The risk of total loss during an extremely wet autumn is completely eliminated

- The farmer does not have to build additional storage to store the hemp crop
- Beef farmers are currently seeking alternative farm enterprises, as the beef sector is not profitable. Beef farmers can switch to hemp farming at little capital cost. Existing infrastructure is in place!

Processing Aspects

The following are all the advantaged for the processor

• The reduction/rendering of the crop to a small particle size has occurred in one simple operation in the field. Green hemp is much easier to cut than desiccated hemp. This has now been achieved
• An existing work force of silage contractors and silage equipment can be directed towards the harvest the hemp crop simultaneously over broad geographical areas. With the dry line dercortication system very expensive equipment is necessary
• only simple blending machinery to combine the materials
• the process actually generates energy and the overall energy requirements are hugely reduced
• the footprint of the factory space is reduced
• production can be expanded very quickly to satisfy demand
• the price can be reduced to the end user as the capital investment is an order magnitude less than the dry line
• farmer contracts are easily achieved as the farmer will now make a good return
• bioregional expansion is more achievable as factory space, energy cost and transport costs are all reduced

The invention is not limited to the embodiments hereinbefore described which may be varied in construction, detail and process step without departing from the spirit of the invention.

**Claims**

1. A process for treating hemp comprising a step of admixing the hemp with calcium oxide to form a reaction mixture, and allowing the calcium oxide react with water in the hemp for a reaction period sufficient to decrease the moisture content of the hemp.

2. A process as claimed in Claim 1 in which the hemp:calcium oxide ratio in the reaction mixture is between 10:20 and 10:1 (w/w).

3. A process as claimed in Claim 1 or 2 in which the reaction mixture is processed to ensure intimate contact between the hemp and the calcium oxide.

4. A process as claimed in any preceding Claim which is a process for (partially) drying hemp.

5. A process as claimed in any preceding Claim in which the hemp is ensiled hemp.

6. A hemp/lime product obtainable by the process of any of Claims 1 to 5.

7. A process for producing a hemp/lime product comprising a first step of treating hemp according to the process of any of Claim 1 to 5 to provide a (partially) dried hemp, and a subsequent step of adding water to the (partially) dried hemp to provide a wet mix hemp/lime product.

8. A process as claimed in Claim 7 in which the ensiled hemp is milled prior to or after the treating step.

9. A hemp lime product obtainable by the process of Claim 7 or 8.

10. A hemp/lime product as claimed in Claim 9 selected from the group comprising: building products; building aggregates; hemp-crete products; hemp-based floor screed products; hemp/lime block; hemp/lime plaster; and hemp/lime renderings.

| | European Patent Office | EUROPEAN SEARCH REPORT | Application Number EP 07 39 4027 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | FR 2 826 360 A (STRASSERVIL EROVENTE S A [FR]) 27 December 2002 (2002-12-27)<br>* page 5, line 23 - page 6, line 22 *<br>* page 10, lines 11-18 *<br>* page 11, lines 8-10 *<br>* page 13, lines 2-14 *<br>* page 6, lines 14-22 *<br>* page 5, lines 3-6 *<br>----- | 1,3,4,6,<br>7,9,10<br>5,8 | INV.<br>C04B18/28<br>C04B28/10 |
| X<br>Y | FR 689 283 A (RIETER FRIDOLF)<br>4 September 1930 (1930-09-04)<br>* the whole document *<br>----- | 1,3,4,6,<br>9,10<br>5,8 | |
| X<br>Y | DE 196 43 605 A1 (SCHILLER HEIKO [DE])<br>16 April 1998 (1998-04-16)<br>* column 1, lines 28-38; claims *<br>----- | 1-4,6,7,<br>9,10<br>5,8 | |
| X<br>A | FR 2 784 374 A (SCOP CHANVRIERE DU BELON [FR]) 14 April 2000 (2000-04-14)<br>* page 2, lines 17-23 *<br>* page 3, lines 1-3,23-30 *<br>* page 3, line 32 - page 4, line 2 *<br>* page 4, lines 7-13 *<br>----- | 9,10<br>1-8 | TECHNICAL FIELDS SEARCHED (IPC) |
| Y | DE 196 33 928 A1 (WINKLER HANS PETER [DE]) 26 February 1998 (1998-02-26)<br>* column 1, lines 12-17; claim 1 *<br>----- | 5,8 | C04B<br>C08H<br>C08L |

-/--

The present search report has been drawn up for all claims

| Place of search Munich | Date of completion of the search 14 March 2008 | Examiner Gerber, Myriam |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 39 4027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEDAN ET AL: "Mechanical properties of hemp fibre reinforced cement: Influence of the fibre/matrix interaction" JOURNAL OF THE EUROPEAN CERAMIC SOCIETY, ELSEVIER SCIENCE PUBLISHERS, BARKING, ESSEX, GB, vol. 28, no. 1, 26 October 2007 (2007-10-26), pages 183-192, XP022316941 ISSN: 0955-2219 * abstract * | 1-10 | |
| A | DAVID SEDAN ET AL: "Effect of calcium rich and alkaline solutions on the chemical behaviour of hemp fibres" JOURNAL OF MATERIALS SCIENCE, KLUWER ACADEMIC PUBLISHERS, BO, vol. 42, no. 22, 28 July 2007 (2007-07-28), pages 9336-9342, XP019528969 ISSN: 1573-4803 * abstract * | 1-10 | TECHNICAL FIELDS SEARCHED (IPC) |

The present search report has been drawn up for all claims

| Place of search | Date of completion of the search | Examiner |
|---|---|---|
| Munich | 14 March 2008 | Gerber, Myriam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 07 39 4027

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2008

| Patent document cited in search report | | Publication date | Patent family member(s) | | Publication date |
|---|---|---|---|---|---|
| FR 2826360 | A | 27-12-2002 | AT | 371633 T | 15-09-2007 |
| | | | BR | 0210483 A | 10-08-2004 |
| | | | CN | 1522234 A | 18-08-2004 |
| | | | CZ | 20033497 A3 | 14-07-2004 |
| | | | DK | 1406849 T3 | 04-02-2008 |
| | | | EP | 1406849 A1 | 14-04-2004 |
| | | | WO | 03004435 A1 | 16-01-2003 |
| | | | JP | 2005503981 T | 10-02-2005 |
| | | | MX | PA03011713 A | 06-12-2004 |
| | | | PL | 364426 A1 | 13-12-2004 |
| | | | US | 2004129182 A1 | 08-07-2004 |
| FR 689283 | A | 04-09-1930 | NONE | | |
| DE 19643605 | A1 | 16-04-1998 | NONE | | |
| FR 2784374 | A | 14-04-2000 | NONE | | |
| DE 19633928 | A1 | 26-02-1998 | NONE | | |

EPO FORM P0459

For more details about this annex : see Official Journal of the European Patent Office, No. 12/82